# EUROPEAN PATENT SPECIFICATION

(11) **EP 1 775 787 B1**
(45) Date of publication and mention of the grant of the patent: **26.10.2011**
(21) Application number: 05743722.0
(22) Date of filing: 30.05.2005
(51) Int. Cl.: H01M 4/52, C01G 53/04, H01M 4/32

(54) **MANUFACTURING METHOD FOR CATHODE ACTIVE MATERIAL FOR ALKALINE BATTERY**
HERSTELLUNGSVERFAHREN FÜR KATHODENAKTIVES MATERIAL FÜR EINE ALKALIBATTERIE
MÉTHODE DE PRODUCTION POUR MATERIAU ACTIV DE CATHODE POUR UNE BATTERIE ALCALINE

(30) Priority: 02.06.2004 JP 2004164917
(43) Date of publication of application: 18.04.2007
(73) Proprietor: Toyota Jidosha Kabushiki Kaisha, Aichi-ken 471-8572 (JP)
(72) Inventor: KOBAYASHI, Tetsuro c/o K.K. TOYOTA CHUO KENKYUSHO, Aichi-gun, Aichi 4801192 (JP); KONDO, Yasuhito c/o K.K. TOYOTA CHUO KENJYUSHO, Aichi-gun, Aichi 4801192 (JP); MATSUO, Hidehito c/o K.K. TOYOTA CHUO KENKYUSHO, Aichi-gun, Aichi 4801192 (JP); SASAKI, Tsuyoshi c/o K.K. TOYOTA CHUO KENKYUSHO, Aichi-gun, Aichi 4801192 (JP); ITOU, Yuichi c/o K.K. TOYOTA CHUO KENKYUSHO, Aichi-gun, Aichi 4801192 (JP); NOZAKI, Hiroshi c/o K.K. TOYOTA CHUO KENKYUSHO, Aichi-gun, Aichi 4801192 (JP); NONAKA, Takamasa c/o K.K. TOYOTA CHUO KENKYUSHO, Aichi-gun, Aichi 4801192 (JP); SENO, Yoshiki c/o K.K. TOYOTA CHUO KENKYUSHO, Aichi-gun, Aichi 4801192 (JP); UKYO, Yoshio c/o K.K. TOYOTA CHUO KENKYUSHO, Aichi-gun, Aichi 4801192 (JP); ITO, Masanori c/o TOYOTA JIDOSHA K. K., Toyota-shi, Aichi 4718572 (JP)
(74) Representative: Kuhnen & Wacker
(86) International application number: PCT/JP2005/009894
(87) International publication number: WO 2005/119819

(56) References cited:
- EP-A- 0 996 182
- JP-A- 11 097 010
- JP-A- 2000 173 614
- JP-A- 2001 325 954
- US-A- 5 905 003
- US-A1- 2003 211 393

## Description

### Technical Field

The present invention relates to a manufacturing method for a cathode active material for an alkaline battery.

### Background of the Invention

An alkaline battery such as a nickel hydride battery or the like using a β-type nickel hydroxide as a cathode active material is widely utilized in the field of household electrical equipment, communication equipment, AV-related equipment, and OA-related equipment or the like. Such an alkaline battery is used not only as a primary battery which discharges only once, but as a secondary battery (an alkaline storage battery) which repeats charge and discharge.

In the alkaline battery, the cathode active material changes at its valence the time of charge and discharge. That is, the cathode active material exists as β-type nickel oxyhydroxide (βNiOOH) in which valence of Ni is 3, when it is charged. On the other hand, the cathode active material exists as β-type nickel hydroxide (βNi(OH)₂) in which valence of Ni is 2 when it is discharges. In this matter, in the alkaline battery, the cathode active material changes from β-type nickel hydroxide to β-type nickel oxyhydroxide or from β-type nickel oxyhydroxide to β-type nickel hydroxide, whereby charges and discharges can be conducted.

As for the cathode active material of the conventional alkaline battery, it was difficult to make utilization ratio of nickel hydroxide equal to or more than 100%. That is, substantial discharge capacity of the cathode active material becomes lower than ideal capacity of nickel hydroxide. As a result, the conventional alkaline battery does not have enough battery capacity, and thus, there is a problem that it cannot be used for electronic equipment or the like which needs high energy density.

Consequently, in order to improve the capacity of the alkaline battery, several techniques have been developed so far.
For instance, in the following patent documents 1 and 2, the technique for improving utilization ratio of Ni by coating nickel hydroxide with Co is described.
In addition, in the patent documents 3 to 5, the technique using nickel hydroxide whose half value width of a X-ray diffraction peak is regulated is described.

However, even if the above conventional technique was employed, it was difficult to make utilization ratio of nickel hydroxide equal to or more than 100% and the alkaline battery with large capacity was not able to be obtained.

Patent document 1: Japanese Patent 3272152
Patent document 2: Japanese Patent 3363670
Patent document 3: Japanese Patent 2576717
Patent document 4: Japanese Patent 3080441
Patent document 5: Japanese Patent 3324781

In US Patent No. 5,905,003 a nickel hydroxide cathode active material which can be made by an ultrasonic precipitation method is described.

### Disclosure of Invention

### Problems to be solved by the invention

In view of the conventional problems, the present invention has been accomplished, and its object is to provide a manufacturing method for a cathode active material having a large discharge capacity.

### Means of Solving the Problems

A first aspect of the present invention is to provide a manufacturing method for a cathode active material for an alkaline battery with a lamellar crystal structure including nickel oxyhydroxide heating a diffraction peak at a position that ranges from 8.4 degrees to 10.4 degrees in diffraction angle 2θ by X-ray diffraction using CuKα-rays according to claim 1.

The most remarkable point in the first aspect of the present invention is the cathode active material has a diffraction peak at the position that ranges from 8.4 degrees to 10.4 degrees in diffraction angle 2θ by X-ray diffraction using CuKα-rays. This specific diffraction peak is provided as a peak that derives from nickel oxyhydroxide contained in the cathode active material (hereinafter, this nickel oxyhydroxide is referenced to as "β'NiOOH" or "β'-type nickel oxyhydroxide").

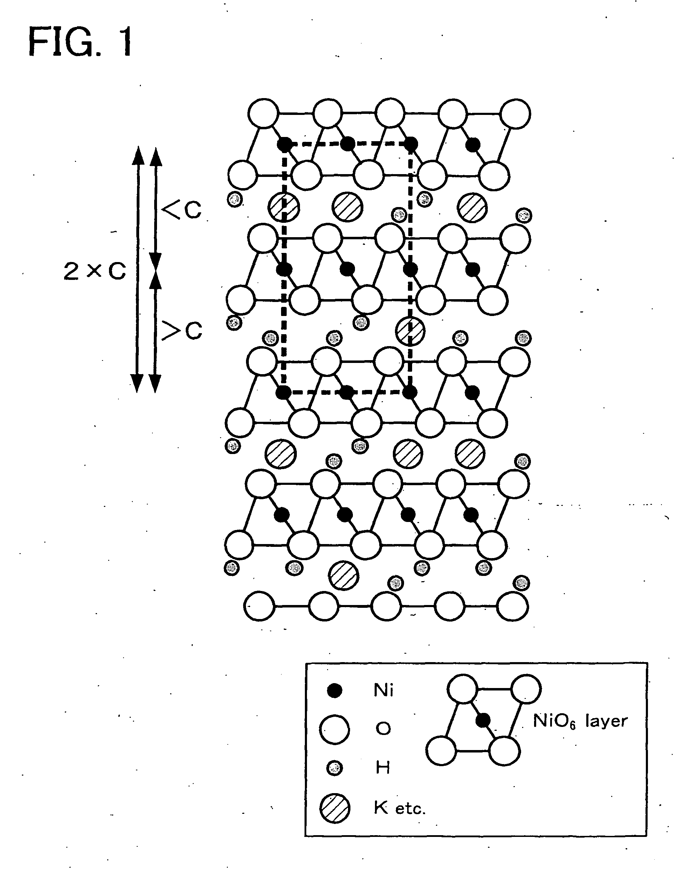

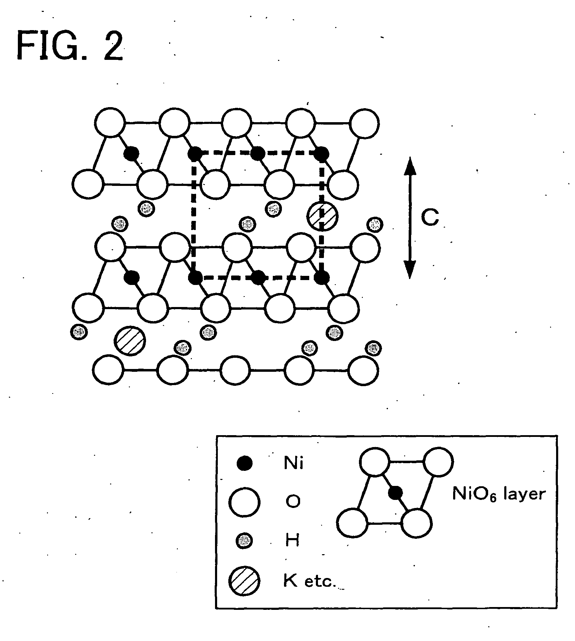

One example of a crystal structure of this β'-type nickel oxyhydroxide is shown in the after-mentioned FIG.1. In addition, one example of a crystal structure of the conventional β-type nickel oxihydroxide (hereinafter, this β-type nickel oxyhydroxide is referenced to as "βNiOOH") is shown in the after-mentioned FIG.2. As known from these FiGs by comparison, β'-type nickel oxyhydroxide contained in the cathode active material is the substance which has a different crystal structure from the conventional β-type nickel oxyhydroxide.

The β'-type nickel oxyhydroxide has high Ni valence as compared to the conventional β-type nickel oxyhydroxide. That is, Ni valence of the conventional β-type nickel oxyhydroxide is 3, on the other hand, Ni valence M of the β'-type nickel oxyhydroxide can be set in the range of 3<M<3.5. Thus, the cathode active material containing the β'-type nickel oxyhydroxide exhibits larger discharge capacity than the conventional cathode active material containing β-type nickel oxyhydroxide
In the cathode active material obtained by a method of the present invention, β'NiOOH which is a cathode active material in the state of charge changes to β-type nickel hydroxide when it is discharged, and the β-type nickel hydroxide changes to β'NiOOH again when it is charged. The cathode active material can charge and discharge by exchanging between the state of β'-type nickel oxyhydroxide and the state of β-type nickel hydroxide.
In this matter, according to the first aspect of the present invention, the cathode active material having large discharge capacity can be obtained by a method of claim 1.

The first aspect of the present invention is to provide a manufacturing method for a cathode active material for an alkaline battery with a lamellar crystal structure including nickel oxyhydroxide characterized by comprising an oxidation process for manufacturing the cathode active material by oxidizing a starting material made from β-type nickel hydroxide with a lamellar crystal structure in a solvent containing alkali and/or alkali salt according to claim 1.

The first aspect of the present invention has a oxidation process in which a starting material with a lamellar crystal structure made from β-type nickel hydroxide is oxidized in the solvent containing alkali and/or alkali salt. In the oxidation process, by oxidizing β-type nickel hydroxide as a starting material in alkali, β'-type nickel oxyhydroxide in the first aspect of the present invention can be generated. That is, it is possible to manufacture the cathode active material of the first aspect of the present invention having the diffraction peak at the position that ranges from 8.4 degrees to 10.4 degrees in diffraction angle 2θ by X-ray diffraction using CuKα-rays.
The cathode active material, as described above, can exhibit high Ni valence and can exhibit large discharge capacity.

### Brief Description of the Drawings

FIG. 1 is an explanation view showing a crystal structure of β'-type nickel oxyhydroxide according to the first embodiment;
FIG. 2 at explanation view showing a crystal structure of the conventional β-type nickel oxyhydroxide;
FIG. 3 is an explanation view showing the X-ray diffraction pattern of the cathode active material of samples X1 to X8 according to the first embodiment;
FIG. 4 is a sectional view showing a structure of a alkaline battery according to the first embodiment;
FIG. 5 is a diagram showing a relationship between capacity of the battery (mAh) and voltage of the battery (V) of the alkaline battery according to the first embodiment;
FIG. 6 is an explanation view showing the X-ray diffraction pattern of the cathode active material (β-type nickel hydroxide) of comparative sample according to the first embodiment.

### Best Mode for Carrying Out the Invention

In the present invention, the cathode active material obtained by a method of claim 1 has a diffraction peak at the position that ranges from 8.4 degrees to 10.4 degrees in diffraction angle 2θ by X-ray diffraction using CuKα-rays. In the case the diffraction peak is outside of this range, there is a danger that discharge capacity of the cathode active material decreases.
The cathode active material contains the β'-type nickel oxyhydroxide having the specific diffraction peak. Besides the β'-type nickel oxyhydroxide, the cathode active material can also contain β-type nickel oxyhydroxide, or β-type nickel hydroxide.

It is preferable that a cathode active material includes one or more kinds of element or ion selected from alkali metals, alkali earth metals, and quaternary ammonium ions in its crystal lattice.
In this case, the cathode active material having the specific diffraction peak can be easily manufactured on manufacturing the cathode active material. That is, the alkali metals, the alkali earth metals, and the quaternary ammonium ions are arranged with a certain periodicity in the crystal lattice of the cathode active material, and whereby it is possible to easily obtain the cathode active material having the above mentioned specific diffraction peak.

As for the alkali metals, specifically, there are Li, Na, K, Rb, and Cs or the like. As for the alkali earth metals, specifically, there are Be, Mg, Ca, Sr or Ba. As for the quaternary ammonium ions, specifically, there are NH₄⁺, N(CH₃)₄⁺, N(C₂H₅)₄⁺, N(C₃H₇)₄⁺, N(C₄H₉)₄⁺ or the like.

Furthermore, it is preferable that the alkali metals, the alkali earth metals, and the quaternary ammonium ions are contained at the rate of 0.03 to 0.20 by atomicity ratio toward Ni in the cathode active material.
In the case it is outside of the range of 0.03 to 0.20, there is a danger that the amount of 'β-type nickel oxyhydroxide in the cathode active material is reduced and the effect to improve a discharge capacity can not be obtained enough. More preferably, the content of the alkali metals, the alkali earth metals, and the quaternary ammonium ions is 0.05 to 0.1 by atomicity ratio toward Ni.

In addition, it is preferable that at least a part of Ni included in the cathode active material is solidly soluble and substituted by one or more kinds of element or ion selected from a transition metal, Mg, Zn, Cd, Al, Y, Yb and Er.
In the case, it is possible to increase oxygen-generation overvoltage of the cathode active material. In addition, it is possible to prevent nickel hydroxide in the cathode active material from changing to γ-type. That is, in this case, it is possible to improve the charging and discharging efficiency of the cathode active material.

Next, the alkaline battery has a cathode including a cathode active material obtained by a method of the present invention, an anode including an anode active material, and alkaline water solution as an electrolytic solution. Such an alkaline battery can be used as a secondary cell but it is possible to use as a primary cell such as a nickel dry cell.

The alkaline battery can be configured by the cathode and the anode, a separator mounted between the both, and the alkaline water solution as the electrolytic solution or the like as the major constituent elements.
In the alkaline battery, the cathode can be formed by, for example, coating a current collector such as a foamed nickel plate with a cathode compound pasted by mixing an electrical conduction promoter and a binder and the like with the above cathode active material and adding a proper amount of water, and then, compressing the coated current collector in order to improve electrode density as required.

As a conductive auxiliary agent, for example, there are compounds including Co such as CoO, Co, CoOOH, Co(OH)₂, Co₂O₃, Co₃O₄ and the like, carbon, and nickel or the like.
The binder serves to bond active material particles and electrical conduction promoter particles with each other. For example, there can be used on or more kinds selected from among: a fluorine resin such as polytetrafluoroethylene, polyvinylidene fluoride, or fluorine rubber, methyl cellulose, polyvinyl alcohol, sodium polyacrylate, and potassium polyacrylate or the like.

The anode can be formed by, for example, coating a current collector such as a foamed nickel plate with a anode compound pasted by mixing a binder with a anode active material and mixing a proper amount of water, and then, pressing the coated current collector as required. As for the binder, the one similar to the cathode can be employed.
Furthermore, in the case metals such as zinc or the like are used as the anode active material, the metal molded in the shape of sheet can be used as the anode. In addition, the metal molded in the shape of sheet can be used that applied in pressure bonding with the current collector.

It is preferable that the anode active material includes one or more kinds selected from zinc, iron, zinc hydroxide, and iron hydroxide.
In this case, the alkaline battery can become the best configuration for a primary cell, therefore, it can exhibit high battery voltage and large battery capacity as the primary cell.

It is preferable that the anode active material includes one or more kinds selected from hydrogen storing alloy, cadmium hydroxide, and hydrogen.
In this case, the alkaline battery can become the best configuration for a secondary cell, therefore, it can exhibit high battery voltage and large battery capacity as the secondary cell.

In addition, the separator sandwiched between the cathode and the anode is the one for separating the cathode and anode from each other and holding electrolytic solution, and for example, a hydrophilic separator can be used. To be more precise, such as a polyethylene nonwoven fabric, a polypropylene nonwoven fabric, a polyamide nonwoven fabric, and a nylon nonwoven fabric or the like which are respectively conducted hydrophilic processing can be used.

As alkaline water solution, for example, water solution containing one or more kinds of salt selected from potassium hydroxide, lithium hydroxide, sodium hydroxide, rubidium hydroxide, caesium hydroxide, calcium hydroxide, strontium hydroxide, barium hydroxide, magnesium hydroxide and quaternary ammonium hydroxide can be used.

The concentration of alkaline water solution as electrolytic solution is preferably 1 to 10 M. In the cre of less than 1M, the electrical conductivity gets lower, and there is a danger that enough battery capacity can not be obtained. On the other hand, in the case of more than 10M, there is a danger that the electrolytic solution easily absorbs carbon dioxide in the atmosphere and carbonate occurs. As a result, the electrical conductivity gets lower in this case as well, and there is a danger that enough battery capacity can not be obtained. More preferably, the concentration of alkaline water solution as a electrolytic solution should be 4 to 8M.

In addition, as a shape of the alkaline battery, there are a coin shape, a cylindrical shape, and a rectangular shape or the like. As a battery case housing the cathode, the anode, the separator and the electrolytic solution serving as an water solution or the like, the one having the shape which corresponds to these shape can be used.

The method of the present invention comprises an oxidation process for manufacturing the cathode active material by oxidizing a starting material made from β-type nickel hydroxide with a lamellar crystal structure in the solvent containing alkali and/or alkali salt. In the oxidation process, the oxidation of the starting material can be conducted by electrochemical oxidation.
As alkali and alkali salt, there are, for example, hydroxide such as the alkali metal hydroxide, the alkali earth metal hydroxide and the quaternary ammonium hydroxide, hypochlorite or chlorite of the alkali metals and the alkali earth metal, and chloride such as the alkali metal chloride or the alkali earth metal chloride. In addition, as a solvent containing alkali and alkali salt, water solution or spray airstream of water solution or the like can be used for example.

It is preferable that in the oxidation process the cathode active material is manufactured by preparing an alkaline water solution including one or more kinds of hydroxide selected from an alkali metal hydroxide, an alkali earth metal hydroxide, and a quaternary ammonium hydroxide at the concentration of 0.1 to 20M, and impressing Hg/HgO standard electrode potential of 0.45 to 0.6V to the starting material in the alkaline water solution.
In this case, it is possible to manufacture the cathode active material easily. That is, in this case, the alkali metal, the alkali earth metal, or the quaternary ammonium ion is disposed to the crystal structure of the starting material (β-type nickel hydroxide) and β'-type nickel oxyhydroxide can be formed easily.

Impressing voltage to the starting material can be conducted by using, for example, the starting material as an electrode.
Moreover, in the case of impressing voltage to the starting material, for example, a potential scanning method or a potential step method can be used for impressing voltage.
The potential scanning method is a method for impressing voltage by increasing the potential gradually at a uniform pace from the potential which the starting material (electrode) indicates.
Furthermore, the potential step method is a method for impressing voltage by stepping the potential at once to the predefined potential from the potential which the starting material (electrode) indicates.

In the case the concentration of hydroxide in the alkaline water solution is less than 0.1M, the electrical conductivity gets lower, and therefore, there is a danger that manufacturing efficiency of the cathode active material decreases. On the other hand, in the case the concentration is more than 20M, the alkaline water solution easily absorbs carbon dioxide in the atmosphere, and there is a danger that carbonate occurs. Therefore, it is necessary to have a equipment or operation for removing CO₂, and thus, there is a danger that manufacturing cost gets increase. More preferably, the concentration of hydroxide in the alkaline water solution is 0.1 to 10M.
In addition, in the case voltage impressing to the starting material is out of the range of 0.45 to 0.6V, there is a danger that β'-type nickel oxyhydroxide can not be obtained enough.

As the alkali metal hydroxide, for example, LiOH, NaOH, KOH, RbOH, and CsOH can be employed.
In addition, as the alkali earth metal hydroxide, for example, Mg(OH)₂, Ca(OH)₂, Sr(OH)₂, and Ba(OH)₂ can be employed.
As the quaternary ammonium hydroxide, for example, NH₄OH, N(CH₃)₄OH, N(C₂H₅)₄OH, N(C₃H₇)₄OH, and N(C₄H₉)₄OH can be employed.

It is preferable that in the oxidation process the cathode active material is manufactured by preparing an alkaline water solution including one or more kinds of hydroxide selected from an alkali metal hydroxide, an alkali earth metal hydroxide, and a quaternary ammonium hydroxide at the concentration of 0.1 to 20M, and putting the starting material and an oxidant with Hg/HgO standard electrode potential of not less than 0.45V in the alkaline water solution.
In this case, the cathode active material can be manufactured easily.

In the case the concentration of hydroxide in the alkaline water solution is less than 0.1M, as described above, the electrical conductivity gets lower, and therefore, there is a danger that manufacturing efficiency of the cathode active material decreases. On the other hand, in the case the concentration is more than 20M, the alkaline water solution easily absorbs carbon dioxide in the atmosphere, and there is a danger that carbonate occurs.
In the case the potential of the oxidant is less than 0.45V, there is a danger that β'-type nickel oxyhydroxide can not be obtained enough. According to the similar reason, it is preferable that the upper limit of the potential of the oxidant is less than or equal to 0.6V. However, even if it is higher than 0.6V, β'-type nickel oxyhydroxide can be obtained by letting processing time be shorter.

As an oxidant, concretely for example, ClO₂, HClO₂, HClO, O₃, Cl₂, NaClO, KClO, NaClO₂, KClO₂, Br₂, NaBrO, KBrO, NaBrO₂, KBrO₂, I₂, NaIO, KIO, NaIO₂, KIO₂, and K₂S₂O₂ can be employed.
In addition, as the alkali metal hydroxide, the alkali earth metal hydroxide, and the quaternary ammonium hydroxide, those similar to the above mentioned can be employed.

It is preferable that in the oxidation process the cathode active material is manufactured by preparing a water solution of hypochlorite and/or chlorite of alkali metals or alkali earth metals with Hg/HgO standard electrode potential of not less than 0.45V, and exposing the starting material to the spray airstream of the water solution.
In this case, the cathode active material can be manufactured easily.
In the case the potential of hypochlorite or chlorite is less than 0.45V, there is a risk that β'-type nickel oxyhydroxide can not be obtained enough. According to the similar reason, it is preferable that the upper limit of the potential of chlorate is less than or equal to 0.6V. However, even if it is higher than 0.6V, β'-type nickel oxyhydroxide can be obtained by letting processing time be shorter.

As a hypochlorite of alkali metals, for example, LiClO, NaClO, KClO, RbClO and CsClO or the like can be employed.
As a hypochlorite of alkali earth metals, for example, Be(ClO)₂, Mg(ClO)₂, Ca(ClO)₂, Sr(ClO)₂ and Ba(ClO)₂ can be employed.
As a chlorite of alkali metals, for example, LiClO₂, NaClO₂, KClO₂ RbClO₂ and CsClO₂ can be employed.
As a chlorite of alkali earth metal, for example, Be(ClO₂)₂, Mg(ClO₂)₂, Ca(ClO₂)₂, Sr(ClO₂)₂ and Ba(ClO₂) can be employed.

It is preferable that the oxidation process is conducted at the temperature between 20 to 80°c in the case of conducting the oxidation process using hypochlorite and chlorite.
In the case the temperature is lower than 20°c, there is a danger that β'-type nickel oxyhydroxide can not be obtained enough. On the other hand, in the case the temperature is higher than 80°c, there is a danger that it becomes difficult to keep the condition of spray airstream appropriate.

It is preferable that in the oxidation process the cathode active material is manufactured by preparing a water solution including alkali metal chloride and/or alkali earth metal chloride at the concentration of 0.1 to 20M, dispersing the starting material into the water solution, and impressing voltage to the water solution.
In this case, by impressing voltage to the water solution of the chloride of the alkali metals and/or the alkali earth metal, alkali metals chloride and/or alkali earth metal chloride are oxidized and hypochlorite of the alkali metals and/or the alkali earth metal is generated. And then, the hypochlorite oxidizes the β-type nickel hydroxide as a starting material, and thus β'-type nickel oxyhydroxide as the cathode active material can be generated. Thus, as well as this case, the cathode active material can be manufactured easily.

In the case the concentration of the water solution of the chloride of the alkali metals and/or the alkali earth metal is less than 0.1M, the electrical conductivity gets lower, and thereby there is a danger that manufacturing efficiency of the cathode active material decreases. In addition, in the case of more than 20M, there is a danger that the electrical conductivity gets lower. More preferably, the concentration of the water solution of the chloride of the alkali metals and/or the alkali earth metal is 0.1 to 10M.

In addition, impressing voltage to the starting material can be conducted by dispersing the starting material into the water solution of the chloride of the alkali metals and/or the alkali earth metal, inserting two insoluble electrodes such as platinum or the like into the water solution, and supplying voltage between electrodes. It is preferable that the impressed voltage is 0.8 to 1.3V. In the case the impressed voltage is out of this range, there is a danger that β'-type nickel oxyhydroxide can not be obtained enough.

As the alkali metals chloride, for example, LiCl, NaCl, KCl, RbCl, and CsCl can be employed.
As the alkali earth metal chloride, for example, BeCl₂, MgCl₂, CaCl₂, SrCl₂, and BaCl₂ can be employed.

### EMBODIMENTS

### [Embodiment]

Now, an embodiment of the present invention will be described with reference to FIG. 1 to FIG. 6.
In this embodiment, the cathode active material is manufactured and an alkaline battery using the cathode active material is manufactured.
The cathode active material of this embodiment is for an alkaline battery having a lamellar crystal structure including nickel oxyhydroxide. The cathode active material has a diffraction peak at the position that ranges from 8.4 degrees to 10.4 degrees in diffraction angle 2θ by X-ray diffraction using CuKα-rays.

The cathode active material of the present embodiment includes β'-type nickel oxyhydroxide having a diffraction peak at the position that ranges from 8.4 degrees to 10.4 degrees in diffraction angle 2θ by X-ray diffraction using CuKα-rays. A crystal structure of this β'-type nickel oxyhydroxide is shown in the FIG. 1. As shown in the same FIG., β'-type nickel oxyhydroxide has a lamellar crystal structure and it includes potassium as alkali metals in its crystal lattice. In addition, for a comparison, a crystal structure of conventional β-type nickel oxyhydroxide is shown in FIG. 2.

As shown in FIG. 2, NiO₆ layer in the crystal lattice of β-type nickel oxyhydroxide keeps a constant interlaminar distance (make this distance as C). On the other hand, in the crystal lattice of β'-type nickel oxyhydroxide, as shown in FIG. 1, the interlaminar distance of NiO₆ layers of both ends of three NiO₆ layers which are continuously arranged is twice as long as the interlaminar distance C, that is, 2 x C as well as the case of the crystal lattice β-type nickel oxyhydroxide. However, the interlaminar distance between an arbitrary NiO₆ layer and one of its adjacent NiO₆ layers is shorter than C. On the other hand, the interlaminar distance between the arbitrary NiO₆ layer and the other adjacent NiO₆ layers is longer than C.

Next, a manufacturing method of the cathode active material of the present embodiment is explained.
In the manufacturing method of the present invention, the cathode active material for an alkaline battery having a lamellar crystal structure including nickel oxyhydroxide. The manufacturing method of the present embodiment comprises an oxidation process which produces the cathode active material by oxidizing the starting material made from β-type nickel hydroxide with a lamellar crystal structure in the solvent containing alkali.

In the oxidation process of the present embodiment, a water solution including the alkali metal hydroxide at the concentration of 5M is prepared and the cathode active material is manufactured by impressing Hg/HgO standard electrode potential of 0.45 to 0.6V to the starting material in the water solution.

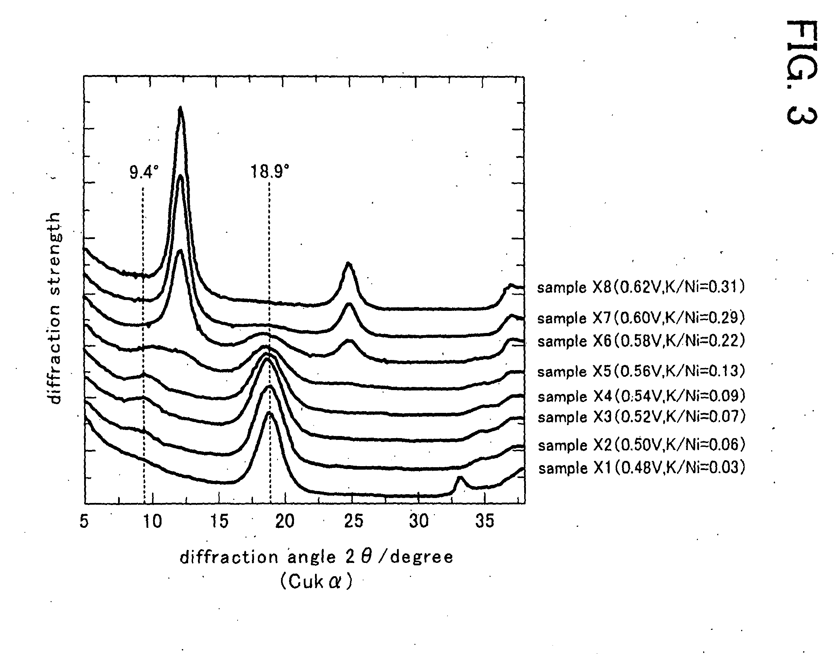

To be more precise, firstly, β-type Ni(OH)₂ was prepared as a starting material. Using this starting material as a electrode, a potential step was conducted in the KOH water solution at the concentration 5M, and the starting material was oxidized by holding it under the condition of the voltage of 0.48V by Hg/HgO standard electrode potential for 10 minutes. A material (the cathode active material) obtained by this oxidization was named sample X1.
Next, a X-ray diffraction was conducted on sample X1. The X-ray diffraction was conducted by a step scanning using CuKα-rays. The step scanning measured every 0.04 degrees of step width and the measurement was conducted for 10 minutes at each degrees. The result is shown in FIG. 3.
In addition, chemical analysis for sample X1 was conducted and an amount of K to Ni (K/Ni) was evaluated by the ratio of the number of atom. As a result, K/Ni was 0.03 on sample X1.

Furthermore, in the present embodiment, seven kinds of the cathode active material were manufactured by the same process as the sample X1 except for changing the voltage in the potential step. These were named as sample X2 to sample X8, respectively.
Sample X2 was manufactured by setting the voltage in the potential step to 0.50V and conducting the other process in the same way as the sample X1. As well as the sample X1, the chemical analysis was conducted for the sample X2. As a result, K/Ni in the sample X2 was 0.06.
Sample X3 was manufactured by setting the voltage in the potential step to 0.52V and the others were the same as the sample X1. As well as the sample X1, scientific analysis was conducted for the sample X3. As a result, K/Ni in the sample X2 was 0.07.

Sample X4 was manufactured by setting the voltage in the potential step to 0.54V and conducting the other process in the same way as the sample X1. As well as the sample X1, the chemical analysis was conducted for the sample X4. As a result, K/Ni in the sample X2 was 0.09.
Sample X5 was manufactured by setting the voltage in the potential step to 0.56V and conducting the other process in the same way as the sample X1 As well as the sample X1 the chemical analysis was conducted for the sample X5. As a result, K/Ni in the sample X2 was 0.13.
Sample X6 was manufactured by setting the voltage in the potential step to 0.58V and conducting the other process in the same way as the sample X1. As well as the sample X1, the chemical analysis was conducted for the sample X6. As a result, K/Ni in the sample X2 was 0.22.

Sample X7 was manufactured by setting the voltage in the potential step to 0.60V and conducting the other process in the same way as the sample X1. As well as the sample X1 the chemical analysis was conducted for the sample X7. As a result, K/Ni in the sample X2 was 0.29.
Sample X8 was manufactured by setting the voltage in the potential step to 0.62V and conducting the other process in the same way as the sample X1. As well as the sample X1, the chemical analysis was conducted for the sample X8. As a result, K/Ni in the sample X2 was 0.31.

The X-ray diffraction was conducted on the samples X2 to X8 in the same way as the sample X1. The results of the X-ray diffraction are shown in FIG. 3 as well as the sample X1.

As is known from FIG. 3, the cathode active material of the samples X1 to X8 has the diffraction peak at the position of about 9.4 degree in diffraction angle 2θ by X-ray diffraction using CuKα-rays, and β'-type nickel oxyhydroxide is formed in the samples X1 to X8. In particular, the diffraction peak at the position of about 9.4 degree is significantly appeared in the samples X2 to X5. Therefore, as for a condition for obtaining β'-type nickel oxyhydroxide, it is preferable to oxidize β-type nickel hydroxide at oxidation potential of 0.5 to 0.56V to Hg/HgO standard electrode.

In the present embodiment, the samples are manufactured by holding the specific voltage for 10 minutes. Though it is not clearly indicated in the present embodiment, by adjusting holding time of this voltage, even if the oxidation is conducted at the same oxidation potential as the sample X1 and the samples X6 to X8, the cathode active material showing more remarkable diffraction peak at the position of about 9.4 degree in diffraction angle 2θ is obtained.

In addition, as shown from FIG. 3, in the cathode active material showing remarkable diffraction peak at the characteristic position as described above, it is preferable that an amount of K in the cathode active material is 0.05 to 0.1 in the ratio (K/Ni) of the number of atom to Ni.

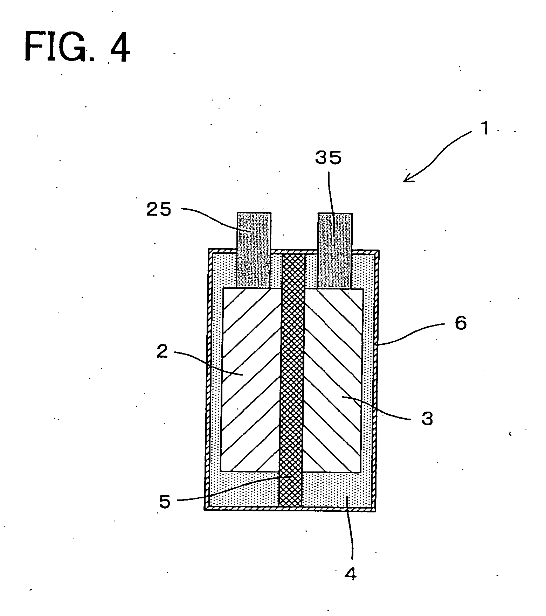

Next, in the present embodiment, the alkaline battery is manufactured by using the cathode active material of the sample X4. As shown in FIG. 4, the alkaline battery 1 of the present embodiment has the cathode 2 including the cathode active material, the anode 3 including the anode active material, and the alkaline water solution as the electrolytic solution 4. The alkaline battery 1 includes the sample X4 as the cathode active material.
As shown in the same FIG., the cathode 2 and the anode 3 in the alkaline battery 1 are formed by binding the cathode active material and the anode active material to the current collectors 25 and 35, respectively. In addition, the separator 5 to separate the cathode 2 and the anode 3 from each other is set between the both. The cathode 2, the anode 3, and the separator 5 are set in the battery case 6 and electrolytic solution 4 is filled in the battery case 6.

The manufacturing method of the alkaline battery 1 of the present embodiment is explained.
First, a pasted cathode compound was fabricated by mixing a fluorine resin, methyl cellulose, and CoO with the powder of the sample X4. This cathode compound was coated on a foamed nickel plate serving as the current collector 25, the coated plate was dried, and the dried plate was defined as cathode 2. In addition, the anode 3 was manufactured by filling a hydrogen storing alloy in a foamed nickel plate as the current collector 35 and drying it.

Next, the hydrophilic separator 5 was prepared and glued to the cathode 2 and the anode 3 together sandwiching the separator 5 between the both. A KOH water solution of 5M in concentration serving as an electrolytic solution 4 was poured into the battery case 6, the battery case 6 was sealed, and an alkaline battery 1 was obtained. This battery was defined as battery E.
In battery E, the cathode 2 is formed in a planar shape of 1.5 cm x 1.5 cm x thickness of 1 mm, and contains 0.94 g of a cathode active material (sample X4).

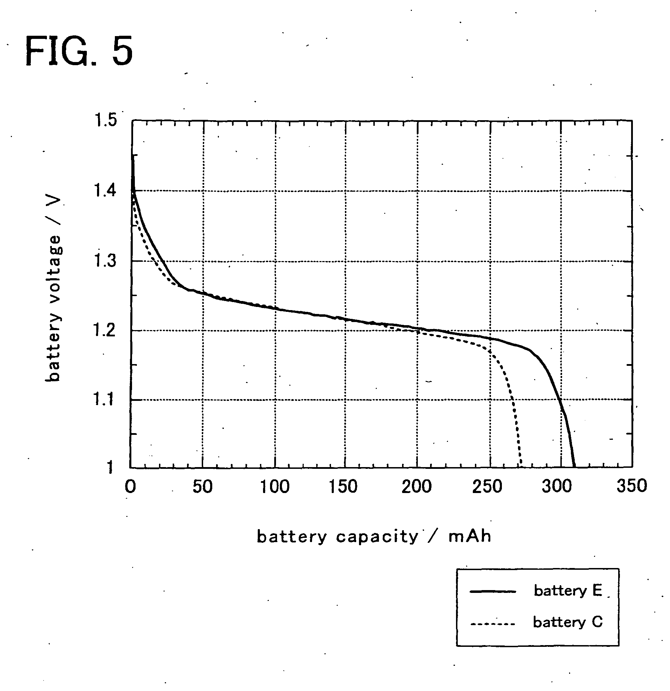

Next, the battery E was charged and discharged, and a change of battery voltage toward the battery capacity of the battery E was checked. Charge was conducted at the temperature of 20 °c and at the current of 60mA for 6 hours. Discharge was conducted until battery voltage reaches 1V at the current of 60mA. The relationship between battery voltage and battery capacity at this time is shown in FIG. 5.

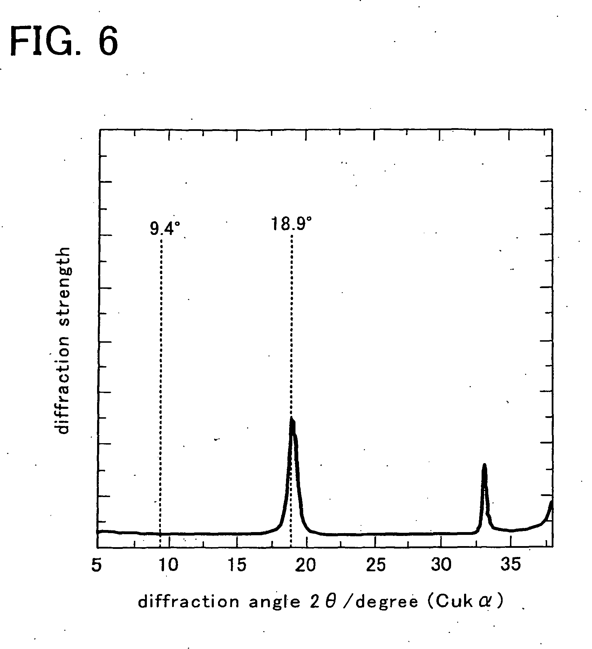

Furthermore, in the present embodiment, in order to clarify the excellent characteristic of the battery E which was manufactured by using the cathode active material of the sample X4, the alkaline battery using a commercially available cathode active material was manufactured for comparison.
Firstly, as a commercially available cathode active material, the cathode active material (sample C) having a X-ray diffraction pattern shown in the FIG. 6 was prepared. This sample C is composed by β-type nickel hydroxide, and does not have the diffraction peak like the samples X1 to X8 at the position of about 9.4 degree in the diffraction angle 2θ by X-ray diffraction using CuKα-ray.

The alkaline battery was manufactured by using this sample C in the same way as the battery E.
To be more precise, firstly, a pasted cathode compound was fabricated by mixing a fluorine resin, methyl cellulose, and CoO with the sample C. This cathode compound was coated on a foamed nickel plate, the coated plate was dried, and the dried plate was defined as cathode. In addition, the anode was prepared in the same way as the battery E.

Further, in the same way as the battery E, the cathode and the anode were glued together with hydrophilic separator sandwiched between the both, and they were inserted in the battery case, and KOH water solution at the concentration of 5M as an electrolytic solution were filled, and then the alkaline battery was obtained by gluing up the battery case. It is named as the battery C. As well as the battery E, the cathode in the battery C is a plate in the state of 1.5cm x 1.5cm x thickness 1mm and it includes the cathode active material of 0.94g.

Next, the relationship between battery voltage and battery capacity of the battery C was checked in the same way as the battery E and the result is shown in FIG. 5.
As is known from FIG. 5, the battery E which is manufactured by using the cathode active material (sample X4) having the above specific diffraction peak increased about 14% in battery capacity compared with the battery C. That is, in the battery C, battery capacity was 272mAh until battery voltage reaches 1V, on the other hand, in the battery E, the large capacity of 310mAh was exhibited until battery voltage reaches 1V. Thus, the battery E has a larger capacity than the battery C, and it can exert higher battery voltage when the same amount of the capacity as the battery C is pulled out.

## Claims

1. A manufacturing method for a cathode active material for an alkaline battery (1) with a lamellar crystal structure including nickel oxyhydroxide having a diffraction peak at a position that ranges from 8.4 degrees to 10.4 degrees in diffraction angle 2θ by X-ray diffraction using CuKα-rays **characterized by** comprising an oxidation process for manufacturing the cathode active material by oxidizing a starting material made from β-type nickel hydroxide with a lamellar crystal structure in a solvent containing alkali and/or alkali salt and a step of impressing a voltage of not less than 0.45V based on Hg/HgO standard electrode potential to the starting material.

2. A manufacturing method for a cathode active material as claimed in claim 1, **characterized in that** in the oxidation process the cathode active material is manufactured by preparing an alkaline water solution including one or more kinds of hydroxide selected from an alkali metal hydroxide, an alkali earth metal hydroxide, and a quaternary ammonium hydroxide at the concentration of 0.1 to 20M, and impressing Hg/HgO standard electrode potential of 0.45 to 0.6V to the starting material in the alkaline water solution.

3. A manufacturing method for a cathode active material as claimed in claim 1, **characterized in that** in the oxidation process the cathode active material is manufactured by preparing an alkaline water solution including one or more kinds of hydroxide selected from an alkali metal hydroxide, an alkali earth metal hydroxide, and a quaternary ammonium hydroxide at the concentration of 0.1 to 20M, and putting the starting material and an oxidant with Hg/HgO standard electrode potential of not less than 0.45V in the alkaline water solution.

4. A manufacturing method for a cathode active material as claimed in claim 1, **characterized in that** in the oxidation process the cathode active material is produced by preparing a water solution of hypochlorite and/or chlorite of alkali metals or alkali earth metals with Hg/HgO standard electrode potential of not less than 0.45V, and exposing the starting material to the spray airstream of the water solution.

5. A manufacturing method for a cathode active material as claimed in claim 4, **characterized in that** the oxidation process is conducted at the temperature between 20 to 80°C.

6. A manufacturing method for a cathode active material as claimed in claim **characterized in that** in the oxidation process the cathode active material is manufactured by preparing a water solution including alkali metal chloride and/or alkali earth metal chloride at the concentration of 0.1 to 20M, dispersing the starting material into the water solution, and impressing voltage of 0.8 to 1.3V between two platinum electrodes to the water solution.

## Patentansprüche

1. Herstellungsverfahren für ein aktives Kathodenmaterial für eine alkalische Batterie (1) mit einer lamellenartigen Kristallstruktur, die ein Nickel-Oxyhydroxid beinhaltet, das einen Beugungs-Peak an einer Position aufweist, die von 8,4 Grad bis 10,4 Grad eines Brechungswinkels 2θ durch Röntgenbeugung unter Verwendung von CuKα-Strahlen reicht, **dadurch gekennzeichnet, dass** das Verfahren einen Oxidationsvorgang zur Herstellung des aktiven Kathodenmaterials durch Oxidieren eines Ausgangsmaterials, das aus einem β-Typ-Nickel-Hydroxid mit einer lamellenartigen Kristallstruktur in einem Lösungsmittel besteht, das Alkali und/oder Alkalisalz enthält, und einen Schritt des Anlegens einer Spannung von nicht weniger als 0,45 V basierend auf einem Hg/HgO-Standardelektrodenmaterial an das Ausgangsmaterial beinhaltet.

2. Herstellungsverfahren für ein aktives Kathodenmaterial nach Anspruch 1, **dadurch gekennzeichnet, dass** in dem Oxidationsvorgang das aktive Kathodenmaterial durch Zubereiten einer alkalischen Wasserlösung, die ein oder mehrere Arten eines Hydroxids beinhaltet, das ausgewählt wird aus einem Alkalimetall-Hydroxid, einem Alkalierdmetall-Hydroxid und einer quaternären Ammoniumhydroxid bei der Konzentration von 0,1 bis 20 M, und Anlegen einer Hg/HgO-Standardelektrodenspannung von 0,45 bis 0,6 V an das Ausgangsmaterial in der alkalischen Wasserlösung hergestellt wird.

3. Herstellungsverfahren für ein aktives Kathodenmaterial nach Anspruch 1, **dadurch gekennzeichnet, dass** in dem Oxidationsvorgang das aktive Kathodenmaterial durch Zubereiten einer alkalischen Wasserlösung, die ein oder mehrere Arten eines Hydroxids beinhaltet, das ausgewählt wird aus einem Alkalimetall-Hydroxid, einem Alkalierdmetall-Hydroxid und einem quaternären Ammoniumhydroxid bei der Konzentration von 0,1 bis 20 M, und durch Legen des Ausgangsmaterials und eines Oxidans mit der Hg/HgO-Standardelektrodenspannung von nicht weniger als 0,45 V in die alkalische Wasserlösung hergestellt wird.

4. Herstellungsverfahren für ein aktives Kathodenmaterial nach Anspruch 1, **dadurch gekennzeichnet, dass** in dem Oxidationsvorgang das aktive Kathodenmaterial durch Zubereiten einer Wasserlösung aus einem Hypochlorit und/oder einem Chlorit aus Alkalimetallen oder Alkalierdmetallen mit einer Hg/HgO-Standardelektrodenspannung von nicht weniger als 0,45 V und **dadurch**, dass das Ausgangsmaterial dem Sprühluftstrom der Wasserlösung ausgesetzt wird, hergestellt wird.

5. Herstellungsverfahren für ein aktives Kathodenmaterial nach Anspruch 4, **dadurch gekennzeichnet, dass** der Oxidationsvorgang bei der Temperatur zwischen 20 bis 80 °C durchgeführt wird.

6. Herstellungsverfahren für ein aktives Kathodenmaterial nach Anspruch 1, **dadurch gekennzeichnet, dass** in dem Oxidationsvorgang das aktive Kathodenmaterial durch Zubereiten einer Wasserlösung, die ein Alkalimetallchlorid und/oder Alkalierdmetallchlorid bei der Konzentration von 0,1 bis 20 M beinhaltet, Dispergieren des Ausgangsmaterials in die Wasserlösung und Anlegen einer Spannung von 0,8 bis 1,3 V zwischen Platinelektroden in der Wasserlösung hergestellt wird.

## Revendications

1. Procédé de fabrication d'une matière active de cathode pour une batterie alcaline (1) avec une structure cristalline lamellaire comprenant de l'oxyhydroxyde de nickel présentant un pic de diffraction à une position qui est de 8,4 degrés à 10,4 degrés dans un angle de diffraction 2θ par une diffraction aux rayons X utilisant des rayons CuKα **caractérisé en ce qu'**il comprend un procédé d'oxydation pour la fabrication de la matière active de cathode par oxydation d'une matière première constituée d'hydroxyde de nickel de type β avec une structure cristalline lamellaire dans un solvant contenant un alcali et/ou un sel alcalin et une étape d'application d'une tension d'au moins 0,45 V rapportée à un potentiel d'électrode de référence Hg/HgO à la matière première.

2. Procédé de fabrication d'une matière active de cathode selon la revendication 1, **caractérisé en ce que** dans le procédé d'oxydation la matière active de cathode est fabriquée en préparant une solution aqueuse alcaline comprenant un ou plusieurs types d'hydroxyde choisis parmi un hydroxyde de métal alcalin, un hydroxyde de métal alcalino-terreux et un hydroxyde d'ammonium quaternaire à la concentration de 0,1 à 20 M, et en appliquant un potentiel d'électrode de référence Hg/HgO de 0,45 à 0,6 V à la matière première dans la solution aqueuse alcaline.

3. Procédé de fabrication d'une matière active de cathode selon la revendication 1, **caractérisé en ce que** dans le procédé d'oxydation la matière active de cathode est fabriquée en préparant une solution aqueuse alcaline comprenant un ou plusieurs types d'hydroxyde choisis parmi un hydroxyde de métal alcalin, un hydroxyde de métal alcalino-terreux, et un hydroxyde d'ammonium quaternaire à la concentration de 0,1 à 20 M, et en déposant la matière première et un oxydant avec un potentiel d'électrode de référence Hg/HgO d'au moins 0,45 V dans la solution aqueuse alcaline.

4. Procédé de fabrication d'une matière active de cathode selon la revendication 1, **caractérisé en ce que** dans le procédé d'oxydation la matière active de cathode est produite en préparant une solution aqueuse d'hypochlorite et/ou de chlorite de métaux alcalins ou de métaux alcalino-terreux avec un potentiel d'électrode de référence Hg/HgO d'au moins 0,45 V, et en exposant la matière première au filet d'air de pulvérisation de la solution aqueuse.

5. Procédé de fabrication d'une matière active de cathode selon la revendication 4, **caractérisé en ce que** le procédé d'oxydation est réalisé à la température de 20 à 80°C.

6. Procédé de fabrication d'une matière active de cathode selon la revendication 1, **caractérisé en ce que** dans le procédé d'oxydation la matière active de cathode est fabriquée en préparant une solution aqueuse comprenant un chlorure de métal alcalin et/ou un chlorure de métal alcalino-terreux à la concentration de 0,1 à 20 M, en dispersant la matière première dans la solution aqueuse, et en appliquant une tension de 0,8 à 1,3 V entre deux électrodes de platine à la solution aqueuse.
